# EUROPEAN PATENT SPECIFICATION

(11) **EP 3 748 456 B1**
(45) Date of publication and mention of the grant of the patent: **05.11.2025**
(21) Application number: 19178108.7
(22) Date of filing: 04.06.2019
(51) Int. Cl.: G05D 1/00, B60W 50/00

(54) **AUTONOMOUS DRIVING CONTROL SYSTEM AND APPARATUS FOR DETERMINING VEHICLE TRAVELLING DATA USABLE IN SAID AUTONOMOUS DRIVING CONTROL SYSTEM**
SYSTEM ZUR STEUERUNG VON AUTONOMEM FAHREN UND VORRICHTUNG ZUR BESTIMMUNG VON FAHRZEUGFAHRDATEN, DIE IN BESAGTEM SYSTEM ZUR STEUERUNG VON AUTONOMEM FAHREN NUTZBAR SIND
SYSTÈME ET APPAREIL DE COMMANDE DE CONDUITE AUTONOME PERMETTANT DE DÉTERMINER DES DONNÉES DE DÉPLACEMENT DE VÉHICULE POUVANT ÊTRE UTILISÉS DANS LEDIT SYSTÈME DE COMMANDE DE CONDUITE AUTONOME

(43) Date of publication of application: 09.12.2020
(73) Proprietor: Astemo, Ltd., Tokyo 100-0004 (JP)
(72) Inventor: SOUFLAS, Ioannis, London, EC2Y 5AJ (GB); TOMATIS, Andrea, 06560 Valbonne (FR); YUSUF, Syed Adnan, London, EC2Y 5AJ (GB); HOLBERT, Laurens, 06560 Valbonne (FR); LI, Dong, London, EC2Y 5AJ (GB)
(74) Representative: MERH-IP Matias Erny Reichl Hoffmann Patentanwälte PartG mbB

(56) References cited:
- US-A1- 2017 132 934
- US-A1- 2018 307 229
- US-A1- 2018 339 710
- HOLGER BANZHAF ET AL: "Learning to Predict Ego-Vehicle Poses for Sampling-Based Nonholonomic Motion Planning", ARXIV.ORG, CORNELL UNIVERSITY LIBRARY, 201 OLIN LIBRARY CORNELL UNIVERSITY ITHACA, NY 14853, 4 December 2018 (2018-12-04), XP081022698

## Description

The present subject-matter relates to an apparatus for determining vehicle travelling data for an autonomous driving control system and an autonomous driving control system, a related control method and a computer program product. The technical benefits of the present subject-matter include that the system is modular, the autonomous/computerized driving imitates a human driver more closely and the reliability and accuracy of the computed control commands are improved.

Automated driving has the potential to change the way of future travelling and different concepts haven been described so far. Robotic-based/optimization-based concepts rely on predetermined rules for setting a travelling path for a vehicle from the current position A to a future target position B. Concepts relying on machine learning and big data can create a travelling path based on so-called artificial intelligence (Al). Existing Al systems are however designed as end-to-end systems which receive an input from a sensor unit of a controlled vehicle or ego vehicle and which output, after a training period of the Al, driving commands to a respective control unit of the vehicle. An integration of the system into vehicles other than the ones for which the system was specifically designed and trained is difficult because of the end-to-end (sensor input to driving commands output) system design. Further, some Al based systems use visual sensor input, e.g. from a camera of the controlled vehicle, as a single source input and they output driving commands based on the camera input, such as NVIDIA 2016, arXiv:1604.07316v1, End to End Learning for Self-Driving Cars, M. Bojarski et al. However, instead of using visual information only, a human driver may adapt his/her driving style based on additional factors, of which one may be the desired future target position the driver has in mind.

US 2018/0307229 A1 describes systems and methods for navigating an autonomous vehicle using reinforcement learning techniques.

US 2018/0339710 A1 describes a vehicle system which includes an electronic control unit. The electronic control unit is configured to execute a first program, a second program and a third program. The first program is configured to recognize an object present around a vehicle, the second program is configured to store information related to the recognized object as time-series map data and the third program is configured to predict a future position of the object based on the stored time series map data.

Further, the driving commands output by known Al systems are computed/trained by using geographical/geometric coordinates, such as GPS coordinates or the like, of an actual position of the controlled vehicle. The actual position must be determined at a high frequency and with high accuracy in order to determine a reliable and safe travelling path for the controlled vehicle. The determination of the position at high frequency and with high accuracy is however demanding in view of computational costs and in view of the required reliability of the positioning system delivering the signal for determining the geographical coordinates. Therefore, there is a demand for more flexible solutions which in addition are more reliable, demand less computational costs and mimic a human driving style better.

The herein described and claimed subject-matter addresses the technical problem to provide an apparatus for determining vehicle travelling data for an autonomous driving control system and a corresponding control system which can be modularized and which improves the adoption of human-like driving behaviour. At the same time, it shall be less/not dependent on the determination of the actual position with high frequency and high accuracy at any time during automated travelling, especially during the training of the Al unit.

Summarizing, it is the technical object to provide an overall improved automated driving apparatus/system/method. The technical problem is solved by the appended claims.

According to the subject-matter set forth in the appended claims, there is proposed an apparatus for determining vehicle travelling data for an autonomous driving control system of a controlled vehicle, preferably for an ego vehicle. The apparatus for determining vehicle travelling data may be an integral part of the autonomous driving control system.

The preliminary travelling path may at least include (geographic or geometrical) coordinates, such as coordinates of a global positioning system or the like, for a plurality of (milestone) positions (also called "waypoints of the coarse path" in the further description) along the preliminary travelling path. The travelling path is named "preliminary" because, preferably, it sets major points (said milestone positions or waypoints) along the future travelling path for reaching a (travelling) target position B starting at the position A, which is preferably the position of the controlled/ego vehicle from which it starts to travel. These major points or milestone positions can be set based on predefined rules, such as connecting starting point/position A by a travelling path to reach target point/position B via streets which are accessible by the controlled vehicle, or connecting the two positions via the shortest connection along a road which can be used by the controlled vehicle, and/or the like.

The preliminary travelling path, preferably, could be considered as a coarse travelling path which may be refined subsequently by an Al unit to arrive at a refined travelling path based on which the controlled vehicle is controlled during the automated driving.

The preliminary travelling path may further include a preliminary speed set for each major position/milestone position/waypoint along the path. The preliminary speed at future milestone positions along the path can be estimated/determined based on map information as one option. In other words, an initial value of the speed at each milestone position can be set during the generation of the preliminary travelling path. For example, map information may include information about speed limits of a road, which the controlled vehicle will travel. The initial speed value may be determined to match with the speed limit from the map information. Other options for determining the speed target may be available in addition or alternatively, e.g., including determining speed based on preset calculation rules using road parameters, such as width of a lane/road, curvature of the road, and/or the like. Further alternatively, the speed may be set based on historic data which the controlled vehicle receives or has stored in an internal map database. The historic data may, e.g., include average speed data at the specific position within a certain time frame in the past, for example collected when another vehicle or the same controlled vehicle drove the same road before. Even further, it may be a preferred alternative to us a computer vision system, e.g. being the environment detection unit or being a part thereof or being connected thereto, which detects traffic signs and sets the speed limits dynamically in accordance with the value read from the traffic signs by the computer vision system.

Preferably, the speed values for each milestone position are assigned statically based on speed limits received from map information or the like. In a further preferred alternative, the speed values for each milestone position are set dynamically based on the values read from traffic signs which are read/detected by a computer vision system/environment detection unit.

The preliminary travelling path may have the shape of a matrix including vectors for X and Y coordinates of each waypoint of the preliminary travelling path and a vector for the speed at each waypoint. Optionally, a Z vector may be included as well wherein Z would indicate the altitude, e.g., above sea level, for each waypoint. The X and Y coordinates may indicate a lateral and a longitudinal position on the earth with, e.g., degree as the unit. The X and Y coordinates may however also be indicated in the unit of meters or any other unit. Instead of a global coordinate system, a local coordinate system may be used, e.g. a controlled vehicle centric coordinate system in which X could be the longitudinal direction of the travelling path and Y the lateral direction thereto.

An occupancy grid may be a 2-dimensional or 3-dimensional virtual representation of an environment of the controlled vehicle. Preferably, the environment of the controlled vehicle includes a predefined range around the controlled vehicle which may have a preferred radius, if it is for example circular, between 1 m to some hundreds of meters. The "environment" may not have to be evenly distributed around the controlled vehicle, and it may have a larger range in the look-ahead direction of the controlled vehicle than in the look-back direction or a lateral direction. Most preferably, the "environment" shall indicate the range which is covered by the environment detection units of the controlled vehicle. The virtual representation of the occupancy grid may be a simplified reproduction of the real environment. In a more preferable option the occupancy grid divides the environment of the controlled vehicle into cells, such as a mesh or a grid, and for each cell of the mesh or grid, which can be 2-dimensional or 3-dimensional, an occupation is determined. For example, the environment is meshed and for each cell of the mesh/grid it may be determined whether the cell is occupied or not. In further preferable options the occupation can be discriminated by different objects occupying the cell(s) or not. In a very specific example of a preferred option, the area in front of the controlled vehicle is observed by lidar/radar/camera or comparable environment detection sensors/units and the images taken by these sensors/units are transformed into a 2-dimensional grid. Preferably the sensors/units output images. However, other data formats may be used as well for example point clouds or even other formats. Then, for each cell it is determined as to whether an object is detected in the cell or not. If an object is detected in the cell, it is defined to be occupied. Map information data can be additionally used to determine which kind of area each cell covers, e.g. a road, a side of a road, a pedestrian walkway, etc.

The occupancy grid may be generated by the sensor/unit which observes/detects the environment. Alternatively, the occupancy grid generation unit may be a separate entity which receives input from the sensors and then generates the occupancy grid based on this input. The occupancy grid generation unit may be integrated into or may be part of the vehicle control unit or the like. The occupancy grid generation unit may alternatively be integrated into a remote computer system which receives the input from the controlled vehicle via wireless data transfer and sends the occupancy grid generated back to the controlled vehicle via wireless data transfer. The occupancy grid may be updated at predefined time intervals or a predefined frequency. The time intervals are preferably very short, e.g. they may be shorter than 1 s and more preferably they may be in the range of 1s down to some milliseconds or less. Further preferably, the update frequency may be around 15 Hz which is once every approx. 60 to 70 milliseconds.

The yaw and the velocity values of the vehicle may be determined for a plurality of positions, in particular for positions including positions of the preliminary travelling path and/or including additional positions in between of the positions of the preliminary travelling path.

In other words, the yaw and the velocity values may be determined for positions of a refined travelling path. Said refined travelling path may include positions of the preliminary travelling path and additional positions in between of the positions of the preliminary travelling path. Such a refined travelling path may be most preferably generated by a neural network which, in particular, adds additional yaw and velocity values for waypoints in between of the milestone positions of the preliminary travelling path/coarse path.

The determination unit **uses** the information received by the input unit, i.e. including the occupancy grid and the preliminary travelling path, for determining the values of the yaw and the speed for a plurality of positions of the refined travelling path. The determination unit may perform the determining repeatedly and especially the inputted occupancy grid may change with each repetition so that the values for yaw and velocity change as well with each repetition. More preferably, the values of yaw and velocity are determined for future travelling waypoints and they may change with each repetition of the determination, in particular because of the changing input from the occupancy grid generation unit. The repetition of the determination may be performed with high frequency, and the higher the frequency, the higher the accuracy of the refined travelling path. A high frequency may include a repetition at a plurality of times during a second and preferably a high frequency means one repetition at each couple of milliseconds or less.

In even other words, the preferred function of the determination unit may be described as follows: It may repeatedly receive an occupancy grid (or a sequence thereof as described as a preferred option further below) and the preliminary traveling path including milestone position vectors and a speed vector. Especially the occupancy grid may change with each repetition. The determination unit, based on the input refreshed at each repetition, may then determine or actually predict velocity and yaw values for future travelling waypoints (the "future" in relation to the point of time at which the determination is actually carried out). More specifically, the determination unit may determine a velocity and a yaw value for each future travelling waypoint and these values may be determined for a predetermined number of future travelling waypoints during each repetition. During each repetition velocity and yaw values corresponding to past waypoints may be disregarded and newly determined velocity and yaw values for additional future waypoints may be added. The vectors/matrix including these values may be thus updated with each repetition of the determining action of the determination unit. It is to be noted that the yaw and speed values may be not only determined for future milestone positions of the preliminary travelling path. The yaw and speed values especially may be determined for additional waypoints, which coordinates may be not calculated yet, in between the milestone positions, and most preferably the refined travelling path or, more precisely, the speed and yaw values thereof, may be generated by the determination unit by ever adding additional newly determined values.

The determination unit could be a computing unit within the controlled vehicle or a remote computing entity which exchanges input and output data with the controlled vehicle via wireless data transfer.

Even though the above and the following was/will be described based on yaw values, yaw rate values may be used instead or in addition to the yaw values. Instead of velocity the term speed is/will be used. Instead of yaw value and velocity value, yaw and velocity may be used as well referring to a value thereof.

According to the above, an apparatus can be provided which is a fully functional module of a route planning or automated driving apparatus and which receives well-defined inputs and outputs so that the apparatus can be flexibly used in different vehicles. The apparatus receives the above described input and output information which can then be processed in subsequently connected modules. Further, the input is not only image based, which especially means occupancy grid based, but it furthermore adds an input which reflects the behavior of a human driver who has the driving target position in mind and acts accordingly. Specifically, the claimed apparatus uses a preliminary travelling path as a further input, i.e. in addition to the occupancy grid, which improves to imitate a human driver even better when planning/following an automated generated travelling path. Further, the output does not include geometric/geographic coordinates as it is the case in previously known systems, but the apparatus outputs a speed vector and a yaw (or yaw rate) vector including speed and yaw (yaw rate) values for each waypoint of the preliminary travelling path and for additional waypoints in between. The output values determined by the determination unit can be independently measured and verified by vehicle on-board sensors during the training and validation of the determination unit and, hence, there is no need to determine the actual position of the controlled vehicle at any time with high frequency and with highest accuracy during the training and validation of the determination unit. In other words, compared and differently to previously known Al based automated systems, which require accurate information about the actual position of the controlled vehicle at each time (and with high frequency) during the training and validation, the present apparatus uses speed and yaw values for planning the further travelling of the controlled vehicle, which can be measured with high frequency and accurately by the vehicle's sensors. Hence, the training and validation of the determination unit can be performed with high accuracy using values which can be measured by vehicle internal sensors, such as an internal measurement unit (IMU) or the like. The reliability of the trained system can hence be improved.

Further, the input to the above described apparatus which stems from the occupancy grid generation unit may include a plurality of occupancy grids which are arranged as a sequence of grids along a time axis. The occupancy grid generation unit may have or may access a buffer or memory (which may be arranged internal with the very unit, in a different unit, or in a remote computer system) in which a plurality of previously computed occupancy grids are stored and which are time stamped. The different occupancy grids may be arranged in a sequence in an order in accordance with their time stamp, e.g. from oldest to newest. The number of occupancy grids being processed as one sequence may include a predefined number and/or a time period covered by the sequence may be preset. The processing of a sequence of occupancy grids can further improve a smooth driving behavior because a more dynamic representation of the environment is processed instead of single static images. For example, the transition of a traffic light from green to yellow to red is a situation that can be captured better by a sequence of images/grids.

Further, the determination unit may be configured to determine or rather predict yaw and velocity values for a predetermined number of positions which are placed in front of the vehicle at the time of determining these values. Preferably, this could mean that the yaw and velocity values for a predetermined number of positions which are lying ahead of the actual position of the vehicle may be determined (and/or calculated/estimated/predicted). These positions may include the milestone positions of the preliminary travel path as well as additional positions in between of these milestone positions. As described before, the above calculation of yaw and velocity values for additional positions, additional to the milestone positions of the preliminary travelling path, enables to generate a refined travelling path which includes additional positions/waypoints in between of the milestone positions of the preliminary travelling path. These additional positions in between the milestone positions are determined/predicted based on the action of the determination (or calculation) unit. The determination is repeatedly carried out (during the loop of the steps which are performed by the apparatus). Due to the changing input, in particular, from the occupancy grid generation unit, the values determined by the determination unit are updated during each repetition. Further, since the position of the vehicle has normally changed at each repetition, the positions for which values are determined change as well; for past positions no values are determined anymore and values for additional future positions are determined with each repetition.

Further, the determination unit may include at least one neural network unit which determines the output based on the above described input. The neural network or Al was preferably trained before the actual use thereof to be able to output the speed and yaw (rate) values based on the input including an occupancy grid and a preliminary travelling path. Using a neural network for the refining of the preliminary travelling path enables the apparatus to generate a precise travelling path/travelling instructions for the vehicle in a manner independent of rigid route calculation rules of an optimization-based approach. The neural network unit, after it was trained accordingly, can predict the yaw and speed values based on the training it has experienced and, for example, by applying/comparing trained situations or similar situations.

Preferably, the neural network may include at least one of a convolutional neural network, a long short-term memory, and/or a fully connected layer network (which may be called "dense") network.

Again, using an Al approach for determining the yaw and speed values of the (refined) travelling path and for realizing an automated driving of a vehicle overcomes the difficulties of purely robotic-based/optimization-based control concepts. The modularized setup of the present apparatus with the specifically defined input and output described above overcomes difficulties related to previous Al based concepts to achieve a safe, reliable, human-like acting and flexibly integratable apparatus/system. More specifically, the output of the Al based determination unit includes yaw and velocity values of the vehicle which can be verified, during the training of the Al/neural network, by comparing these values with the output values of internal vehicle sensors, such as an IMU. This is an advantage compared to neural networks which directly output coordinates of waypoints because the verification of waypoint coordinates requires a very accurate determination of the actual vehicle position at high frequencies and at any time of the training.

Further, the claimed subject matter may include an autonomous driving control system for controlling a vehicle, preferably an ego vehicle. The (controlled) vehicle may have an occupancy grid generation unit configured to generate an occupancy grid based at least on input from an environment detection unit/sensor of the ego vehicle. The occupancy grid generation unit was already explained above. The environment detection unit may also be named "sensor" in the following and it may comprise, e.g., a lidar (light detection and ranging) sensor, a radar (radio detection and ranging) sensor, a camera, an electromagnetic wave unit in general or any other comparable device for detecting the environment of the vehicle. Further, the environment detection unit may also receive data via a wireless connected information server, which may provide map information or the like. Map information may preferably include navigation data, such as information about streets, roads, speed limits, geographical coordinates, buildings, points of interest, and the like.

Further, the control system may include a preliminary travelling path generation unit which generates the above described preliminary travelling path. As already briefly explained above the generation of the preliminary travelling path may be based on the actual or start position of the controlled vehicle A and further it may use information about the target position or driving/travelling target position B. The connection between these two positions A and B may be called a global travelling path. Preferably, the preliminary travelling path includes further intermediate milestone positions/waypoints in between the start position and the target position. Especially, intermediate milestone positions may be determined/set in case there is more than one possibility for connecting the start position and the target position and/or in case the connection between the start and the target position is not straight and/or there are different speed limits and/or the like.

Further optionally, during a control method being performed by the control system, the preliminary travelling path generation unit may check as to whether a previously generated preliminary travelling path has to be updated based on newly received map information or based on a new actual position of the controlled vehicle. However, the control system and the method carried out thereby do not require that the preliminary travelling path or coarse path is changed/updated after it was once generated, except the global travelling path should change because, for example, the driving target position changed, an obstacle appears along the route or the driving target position was reached or the like. In other words, in a standard scenario, the preliminary travelling path is generated once and it is not changed until the driving target position is reached. Exceptions to the standard scenario include, for example, may be caused by obstacles which are detected during the driving which make it necessary to change the preliminary travelling path or if the driving target position has changed or the like. Obstacles may be completely blocked roads, heavy traffic jams or the like. However, if an obstacle blocks the travelling path or the road thereof only partially, which may be caused by a parked car, a slower vehicle on the road or the like, the determination unit avoids the obstacle when determining the values of the refined/updated travelling path before it arrives at the obstacle.

Further, the control system may additionally include the apparatus for determining vehicle travelling data according to at least one of the above described aspects/features.

As mentioned above, occupancy grid sequences are used as an input to the above described apparatus. Then, an occupancy grid sequence generation unit may be provided with the claimed control system which may be part of the occupancy grid generation unit or which may be a separate entity. The occupancy grid sequence generation unit may be configured to generate an occupancy grid sequence by arranging a plurality of occupancy grids, each occupancy grid including time data or time stamp, along a time axis in accordance with time data of each occupancy grid. The autonomous driving control system may further be configured so that the occupancy grid generation unit uses map data received from a map information unit (which may be installed in the controlled vehicle, such as a navigation apparatus, or it may be located in a remote system) in addition to the environment detection unit for generating the occupancy grid and/or point cloud data received from a point cloud data generation unit.

Further, the autonomous driving control system may include an updated travelling path generation unit (also called "trajectory generator") configured to generate an updated travelling path based on the output of the output unit/of the above described apparatus. The updating of the updated travelling path may be carried out repeatedly. In even other words, the updated travelling path may be repeatedly computed (in a loop) by iterating over each row of the yaw/speed vector as produced by the determination unit/neural network. After going through all the rows of the yaw/speed vectors the path may be generated and, in a further preferred option, it may be output to a rule based safety system ("safety unit" in the following) for further checks. The updated travelling path may preferably comprise vectors including (geographical/geometric) coordinates for each position, indicated e.g. by X position and Y positon vectors. Optionally, it may include a vector with Z values for each position. Further, a vector with speed values for each position of the updated travelling path is preferably output by the updated travelling path generation unit, too. The speed values output by the updated travelling path generation unit, more preferably, may be identical with the speed values output by the apparatus described above.

More specifically, the output of the output unit includes speed and a yaw values as described above. The output preferably has the form of vectors or matrix(ces). These values are input to the updated travelling path generation unit which may determine the coordinates for the positions of the refined travelling path for which the determination unit has output speed and yaw values. Hence, additional waypoints (or in other words coordinates thereof) are determined based on the speed and yaw values which the determination unit predicted and output (via the output unit). The updated travelling path generation unit hence outputs the coordinates of positions of the refined travelling path which may also be called the positions of an updated travelling path. Further, the updated travelling path generation unit may, in addition to the coordinates, a speed at each position of the updated travelling path. The speed may be unchanged compared to the input into the updated travelling path generation unit, as already mentioned above.

The updated travelling path generation unit may also be named a (travelling) trajectory planner/generator in the following. The unit may preferably include at least one constant velocity vehicle model unit and more preferably at least one constant turn rate and velocity vehicle model unit. Of course, other models may be used as well: e.g. one of the further options for a model may be a constant turn rate and acceleration model.

The input to the updated travelling path generation unit may be entered into the equations of the constant (turn rate and) velocity vehicle model for receiving the above described coordinates of the refined/updated travelling path.

The method performed by the system may include to repeat, in a loop, the determination of the yaw and speed vectors by the above described apparatus based on repeatedly updated occupancy grids or sequences thereof and a preliminary travelling path set once (it may be changed, as described above, if necessary, e.g., when the driving target position changes or is reached or the like). Further, the repeatedly updated yaw (rate) and speed vectors are input into the updated travelling path generation unit which then outputs repeatedly newly determined updated travelling path data for each positon of a refined path/updated travelling path. For example, in a preferred option, during each repetition of the control loop, each value of a travelling path position of the updated travelling path corresponding to a position of the travelling path which was already passed is removed from the travelling path and a newly created value is added based on the newly created input. Further, for example, the vectors of the updated travelling path may include values for a predefined number of travelling path positions in the future and each time the control method is repeated the value corresponding to the just past position is removed and replaced by a further position in the future of the vehicle driving. With regard to the occupancy grid sequence it may be vice versa, which may mean that a predefined number of occupancy grids are included in the sequence which reach from an actual position/time into the past (with regard to their time of generation/time stamp).

The input to the updated travelling plan generation unit does not depend on an actual position of the controlled vehicle but it only uses speed and yaw values which are measurable by vehicle internal sensors with low effort and high accuracy. This is an advantage during the training of the here proposed system and compared to systems which require, for the training of the route planning/automated driving, accurate positional data/coordinates. The advantage is particularly evident when it is taken into account that the accuracy/availability of positional data may vary heavily, depending, e.g., on the location at which the vehicle travels. In other words, systems which are trained based on the actual positional data of the controlled vehicle may become inaccurate or fail when accurate positional data were not available. The present system in the configuration as explained above relies on other input data into the updated travelling path generation unit which can be determined with high accuracy at any time during the travel. Therefore, the finally trained Al based determination unit has improved reliability and it can output speed and yaw values to the updated travelling plan generation unit which are based on more accurate training data/scenarios.

The system may further comprise a safety unit which may receive the output, as an input, from the updated travelling plan generation unit. The safety unit may have stored predefined safety rules for the travelling path and it may compare the updated travelling path with these safety rules. It may further output a flag if a safety rule is violated. Furthermore, the safety unit may output the updated travelling path as received (i.e. not amended) from the updated travelling path generation unit. Therefore, the updated travelling would become the final travelling path when output by the safety unit. If the safety unit is not provided in the system, the updated travelling plan/path may be the final travelling plan/path.

Further, there may be provided a controlled vehicle including an autonomous driving control system according to at least one of the preceding aspects/features. Further, the vehicle may include at least one environment detection unit, which may be one of or a combination of a lidar unit, a camera unit, a stereo-camera unit, a radar unit, an electromagnetic wave unit; and it may also preferably include a map information unit receiving map information.

Further, there may be provided a method for determining vehicle travelling data for an autonomous driving control system of a vehicle preferably comprising determining values of yaw and velocity of the vehicle based on an occupancy grid received from an occupancy grid generation unit of the autonomous driving control system and based on a preliminary travelling path received from a preliminary travelling path generation unit of the autonomous driving control system. The method may further include a step of generating an updated travelling path based on the determined yaw and the determined velocity of the vehicle. The method may further include aspects, features and steps in correspondence with the above described subject-matter.

Further, a computer program product storable in a memory comprising instructions which, when carried out by a computer, may cause the computer to perform the herein described method may be provided.

Summarizing, a solution is provided which allows to provide a more flexible, because modular, system for controlling an automatically driving vehicle. At the same time, said system is more reliable and controls the vehicle more human-like.

In the following the claimed subject-matter will be further explained based on at least one preferential example with reference to the attached exemplary drawings, wherein:
- Figure 1: shows an example of a top level system architecture of a proposed autonomous driving control system,
- Figure 2: shows details in particular relating to an apparatus for determining vehicle travelling data for an autonomous driving control system,
- Figure 3: shows an example of an output of a proposed autonomous driving control system,
- Figure 4: shows an example of a method for operating an autonomously driven vehicle,
- Figure 5: shows a schematic of a vehicle 100.

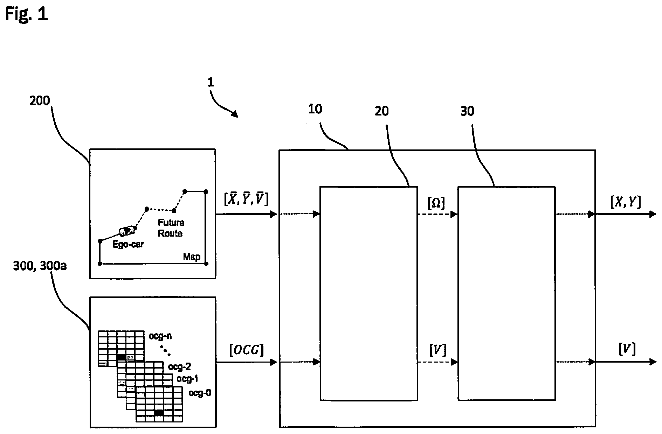

Figure 1 shows an exemplary top level system architecture of a proposed autonomous driving control system 1 which also includes a proposed apparatus 20 for determining vehicle travelling data. A preliminary travelling path generation unit 200 receives data about an actual position of the controlled/ego vehicle 100 and sets milestone positions/waypoints in between the actual position and a travelling target position. The milestone positions may be set such that a coarsely set route for getting to the travelling target position is generated. This coarsely defined route could be generated by a robotic-based or optimization-based path setting approach, e.g. predefined rules are used to set a path to get from a current position to a (travelling) target position. The predefined rules may, e.g., include the way as to how the route is set, e.g. the shortest connection, the fastest connection, or the like. Further, these predefined rules may include which kind of roads should and/or may be taken, taking into account traffic signs and rules, such as speed limits and the like. Preferably, the optimization-based path setting approach may use a Dijkstra Algorithm" and/or an "A* Algorithm".

The coarsely set route generated by the preliminary travelling path generation unit 200 is also called the preliminary travelling path and includes the future travelling milestone positions guiding from the current position to the target position. The included waypoints/milestone positions provide a low resolution, i.e. a coarsely set path of interconnected waypoints, and, in addition, as an option, the speed limits for each of the waypoints/milestone positions along the route. The preliminary travelling path generation unit 200 receives (not shown in the Figure), as an input, at least map information data and an actual position of the ego/controlled vehicle. The map information data may include information about roads in the environment around the controlled vehicle, buildings, rules for the roads, such as speed limits, and the like. Further, the map information may further include traffic information, such as a congestion status of a road and the like. The actual position may be indicated by geographical coordinates determined by way of using a signal from a global positioning system or any comparable system. The actual position may in addition or alternatively be triangulated using other sources, such as wireless communication networks and the like.

The predefined rules for setting the coarse route to the target position may be stored in an internal storage unit (not shown) of the herein described system or they may be stored in a remotely arranged computer (not shown).

According to one example, a basic predefined rule may include that a route is set which connects the actual position of the controlled vehicle (at the start of the travelling) with the travelling target position by the shortest connection along road(s) on which the controlled vehicle may travel. Further, at each turning point along the route a waypoint/milestone position may be set in between the actual position and the target position. Figure 1 shows said example. Other predefined rules may be available in addition or instead of the example previously described.

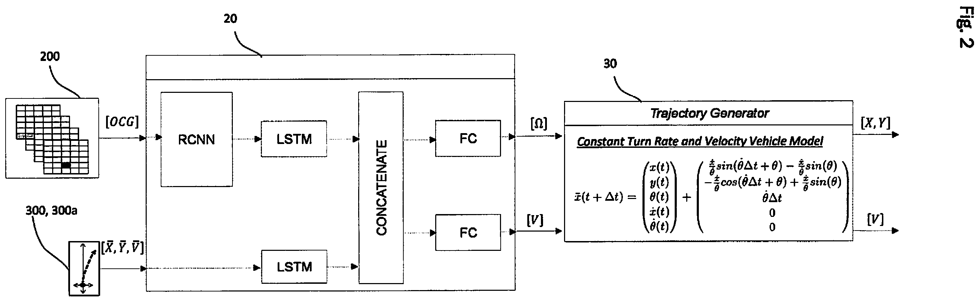

The preliminary travelling path generation unit 200 inputs the preliminary travelling path into a determination unit (part of apparatus 20) (via an input unit) which is included in the apparatus 20 for determining vehicle travelling data. The output from the preliminary travelling path generation unit 200 includes vectors or matrices which include values for each future waypoint of the preliminary travelling path, in particular (X and Y) coordinates and optionally speed limit values. The vectors are indicated by *X̅, Y̅, V̅* in the Figures 1 and 2.

The apparatus 20 for determining vehicle travelling data, besides the input from the preliminary travelling path generation unit 200, further receives an occupancy grid ocg from an occupancy grid generation unit 300, 300a. The Figure 1 shows that the occupancy grid ocg includes a series of occupancy grids ocg_0..n arranged to a sequence OCG ordered in accordance with time. However, in the basic scenario the occupancy grid may include a single grid only. In a further preferred scenario, the input includes a sequence of occupancy grids ocg_0..n.

The occupancy grid ocg is preferably a two-dimensional representation of the vicinity or area around the controlled vehicle which divides the area around the controlled vehicle 100 in cells, i.e. a meshing is carried out by the occupancy grid generation unit, and for each cell an occupation is determined. The occupation information by may be digital, i.e. indicating that the cell is blocked/occupied or not, or it may be more detailed indicating, e.g., the cause of the occupation, e.g. blocked by a person, blocked by a (part of) another vehicle, blocked by a building, etc. or unoccupied/free, the kind of space, e.g. street, side lane of a street, building space, natural space (e.g. lawn, forest, etc.), etc., and/or other details. The occupancy grid generation unit 300, 300a may receive map information from a map information system, such as a navigation system or the like, and at least information from an environment detection unit 4, which may include one of or a combination of a radio detection and ranging (RADAR) sensor, a light detection and ranging (LIDAR) sensor, a light amplification by stimulated emission of radiation (LASER) sensor, a sound navigation and ranging (SONAR) sensor (e.g. ultrasound), an infrared (IR) sensor, an image sensor (e.g. camera), vehicle location devices (e.g. GPS), etc. Detection of an object may be performed, i.a., by detecting predefined sensor patterns in the data or by using another known method.

The generation of the occupancy grid ocg based on the above mentioned input information is already known and e.g. based on image processing and the like. If a sequence of occupancy grids is generated, each occupancy grid is generated with a time information, e.g. a time stamp, and then the occupancy grids are ordered in accordance with their time stamp. Each time the occupancy grid generation unit repeats the generation, one or more of the oldest occupancy grids may be replaced so that a predefined time period from the past to the time at the actual position of the controlled vehicle is covered by the sequence of occupancy grids.

The occupancy grid or the sequence thereof is input, as described above, to the apparatus 20 which preferably uses neural networks for generating yaw (or yaw rate) values and speed values of the controlled vehicle for positions along a refined travelling path which includes the milestone positions of the preliminary travelling path and additional positions in between. Actually, the yaw and velocity values are repeatedly refreshed for a predetermined number of future travelling positions relative to the actual position of the vehicle 100 and based on the changing input to the apparatus 20, wherein, in a standard scenario, only the occupancy grid or the sequences thereof change while the coordinates of the waypoints of the preliminary travelling path remain unchanged until, e.g, the driving target position is reached. The determination unit of the apparatus 20 preferably predicts (after the neural network was trained) speed and yaw values for additional waypoints of the refined travelling path based on the training experience of the neural network and, e.g., by comparing known training situations with the present real situation.

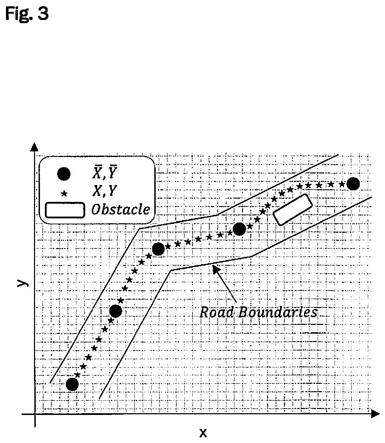

The apparatus 20 for determining vehicle travelling data is more closely shown, in accordance with one possible example for the internal setup of the apparatus 20, by Figure 3. Here, in the exemplary representation of Figure 3, the apparatus 20 uses a recurrent convolutional neural network RCNN receiving the occupancy grid/sequence thereof and passes processed occupancy grid data to a long short-term memory LSTM and a concatenate and a first fully connected layer network FC. The preliminary travelling path data is input to a further long short-term memory LSTM before it is passed to concatenate and a second fully connected layer network FC. The first fully connected layer network outputs a yaw as a control parameter and the second fully connected layer network outputs a speed as control parameter. The above example of an internal configuration of the apparatus 20 or its determination unit may be different and the above shows only one possible example for the combination of different neural networks and the like.

The above described output of the neural network is different to previous concepts of known Al based autonomous driving systems and it not only allows a further modularization of the travel control system but it furthermore has the technical advantage that, based on the speed and the yaw, a more detailed (compared to the coarse preliminary travelling path) travelling path can be generated wherein the generation of the detailed/refined travelling path does not rely, during the training of the Al, on the accuracy of the identification of the actual position as an input, such as previously used concepts. The accuracy of the speed and yaw can be determined at high frequency and very precisely by measurement values of vehicle internal sensors, such as a speed sensor and a yaw sensor, which allows to enable a more reliable/precise training of the herein described system.

The speed and the yaw values output as vectors include a value for each waypoint of the refined travelling path or a part thereof. More specifically, speed and yaw values are output for the predetermined number of next travelling waypoints which may include milestone positions of the preliminary travelling path and/or additional waypoints/positions in between of the milestone positions. An updated travelling path generation unit 30 uses said output to determine, based on a constant velocity model or a constant turn rate and velocity model or the like, an updated travelling path which includes the coordinates of the additional positions/waypoints so that the resolution of the entire travelling plan/path is higher compared to the coarse travelling path/preliminary travelling path. Further it may also include a speed value for each waypoint.

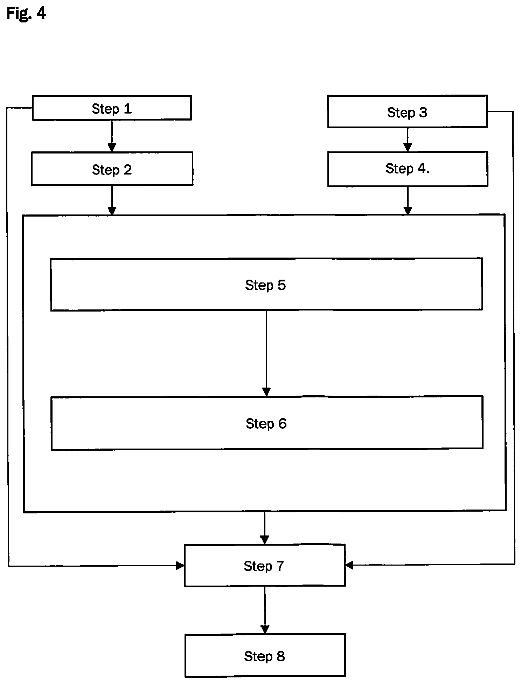

The difference between the preliminary and the updated travelling path is shown by Figure 4 which uses a thick dot for the "milestone positions" of the coarse path and which uses stars for the additional waypoints included by the determination unit (which predicts the speed and yaw values for these positions) and the updated travelling path generation unit (which in particular determines the coordinates of these positions). A finalized path may then direct the controlled vehicle within the boundaries of a lane or road and around possible obstacles, as shown by the rectangle in the Figure 4. The path is indicated by x and y coordinates which may be mapped to geographical coordinates of a map.

Furthermore, Figure 4 shows that the system can even deal with obstacles which do not block the travelling path/road entirely, because, within the framework of the unchanged preliminary travelling path (thick dots in Figure 4), the waypoints of the updated travelling path can be determined to avoid a collision with the obstacle, e.g. a slower car in front of the controlled vehicle (void rectangle in Figure 4). This is possible because the waypoints of the refined travelling path/updated travelling path are determined dynamically and at a time briefly before the obstacle is reached by the controlled vehicle. For example, the relevant waypoints shown by stars in Figure 4 which go around the obstacle shown in Figure 4 are determined at the time when the obstacle is detected and included in the occupancy grid or the sequence of the occupancy grids. As soon as the occupancy grid(s) include an information about the obstacle, in particular its position, this input will lead to waypoints being determined by the determination unit 20 and the updated travelling plan generation unit 30 which avoid the obstacle indicated in occupancy grid(s). Therefore, in other words, a resetting or amending of the preliminary travelling path would only become necessary if the additional waypoints of the refined/updated travelling path could not be set such as to find a way, e.g., for avoiding a collision therewith.

The Figures do not show further possible modules of the herein described system 1 which may include a safety unit which may receive the output from the updated travelling path generation unit 30 for checking safety rule violations of the updated travelling path. If a violation should be found, e.g., if the speed is higher than a speed limit, the coordinates of a waypoint are outside of a road, or the like, a safety flag can be set, indicating that the generated path is not usable. Then, the safety unit outputs a final travelling path in which, in addition and in deviation from to the updated travelling path a flag may be added or not. If no dedicated safety unit should be used, the updated travelling path output by the updated travelling path generation unit 30 preferably is the final travelling path, called updated travelling path above.

Figure 4 further shows an exemplary method performed by the system proposed herein. The steps of the method were already described above and they are described in other words in the following: In a step 1, input from a perception system or environment detection unit 4 is fused and different visual sensor data (which may be output by the environment detection unit 4) may be processed to represent the surrounding environment in the form of an occupancy grid. In a step 2, a sequence of occupancy grids starting from the most recent up to a predefined occupancy grid in the past is generated by the occupancy grid generation unit 300 which may include a sequence generation unit 300a (which may be a separate unit or it may be included in the occupancy grid generation unit 300).

In a step 3, a localization unit (not shown) may provide the actual position of the vehicle in a predefined map or route. The localization unit may determine the position by fusing and processing different positioning and vehicle sensor data. In a step 4, the preliminary travelling path is generated by the preliminary travelling path generation unit 200 when knowing the position of the (controlled) vehicle in the map or route generating a vector of future desired (coarse) waypoints/milestone positions.

The above steps 1 to 4 may be performed with various timings. For example, the steps 1 and 2, and 3 and 4 may be started and/or carried out in parallel. Further, the steps 3 and/or 4 may be performed once, when the preliminary travelling path is generated. The steps 1 and 2 may be preferably performed in a repeated manner so as to refresh the input to the apparatus 20 with high frequency.

In step 5, which is carried out within the apparatus 20, the input occupancy grid sequence and the vector of future desired waypoints (the vectors/values of the preliminary travelling path) is used to compute/predict a sequence/vector of future yaw and velocity demands/value, for each but also in between of the future milestone positions, by using a neural network unit, preferably a recurrent convolutional neural network, which was previously trained using human driving data.

In step 6, which is carried out in the updated travelling path unit 30, using the sequence/vector of future yaw and velocity demands/values generated from the determination unit/apparatus 20, the future updated trajectory/updated travelling path of the vehicle 100 is computed by using a vehicle model iteratively, meaning each new waypoint is calculated based on the result of the previous calculation.

In a step 7, which is optional, it is checked that the resulting updated travelling path is constrained to predefined engineering limits. If not, a flag is set that the path is not valid. In a further step 8, a control unit of the vehicle 100 may manipulate the steering, acceleration and brake demands such that the vehicle 100 is following the updated travelling path.

One or more of the above steps may be carried out in a loop so that the driving commands can be updated repeatedly. The boxes indicated in the Figure 4 represent a unit in which the respective step written in the box may be carried out preferably, the arrows further indicate possibly data transfer routes between the units. For example, step 1 may be preferably carried out by an environment detection unit 4 and/or an occupancy grid generation unit 300. Step 2 may be preferably carried out, receiving data from the environment unit 4, by an occupancy grid generation unit 300, 300a which may output occupancy grid(s) or sequences thereof to the apparatus 20 in which step 5 may be preferably carried out. Steps 3 and 4 may be preferably carried out by a localization unit and the preliminary travelling path generation unit 200 which outputs the preliminary travelling path or vectors thereof to the apparatus 20. Step 6, after receipt of the output from apparatus 20, may be preferably performed by the updated travelling path generation unit 30 which may output the updated travelling path or data thereof to the safety unit which preferably may perform step 7. Step 8 may preferably perform the actual driving control of the vehicle 100 based on the input from the updated travelling path generation unit 30 or the safety unit.

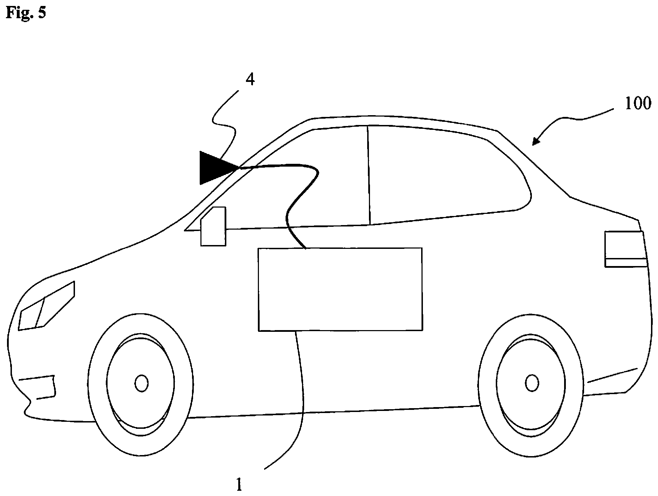

Figure 5 shows an exemplary vehicle which may include, inter alia, the control system 1 and at least one environment detection unit 4 which are connected to each other and installed within the vehicle 100. A control unit of the vehicle 100 and the system 1 may be provided and they may be separate units; alternatively the two units may be combined to form a single unit. The vehicle 100 may have a plurality of control units which may include an engine control unit (ECU).

The own vehicle 100 includes at least one environment detection unit 4 (or simply sensor(s)) and preferably it includes a plurality of such units 4. The system 1 may include further subunits for providing driving control functions, such as steering control units, throttle control units, brake control units and the like. Preferably, the system 1 combines all relevant control functions of the vehicle 100. Based on the above sketched configuration, it is possible that the vehicle 100 drives autonomously controlled by the control apparatuses/units, which use information provided by the environment detection unit(s) 4 and further information, e.g. information/data received via optional communication units of the vehicle 100 which can receive data from a remote data source, such as the Internet, remote servers, and/or GPS. The further information may include map information, traffic information, and the like.

Summarizing, the described subject matter allows to provide a more flexible, because modular, system for controlling an automatically driving vehicle. At the same time, said system is more reliable and controls the vehicle more human-like.

## Claims

1. Apparatus (20) for determining vehicle travelling data for an autonomous driving control system (1) of a vehicle (100) wherein the apparatus comprises:
an input unit configured to receive an occupancy grid (ocg) from an occupancy grid generation unit (300) of the autonomous driving control system (1) and a preliminary travelling path from a preliminary travelling path generation unit (200) of the autonomous driving control system (1), wherein the preliminary travelling path includes coordinates (X, Y) for a plurality of positions along the preliminary travelling path;
a determination unit configured to determine yaw and velocity values of future travelling positions of the vehicle based on the occupancy grid and the preliminary travelling path received by the input unit; and
an output unit which outputs the determined yaw and velocity values of the vehicle (100) to an updated traveling path generation unit (30) of the autonomous driving control system (1),
wherein the input to the updated traveling path generation unit (30) does not include an actual position of the vehicle (100) but only comprises the determined yaw and velocity values of the vehicle.

2. Apparatus according to claim 1, wherein the occupancy grid (ocg) includes a plurality of occupancy grids which are arranged as a sequence of grids (OCG) along a time axis.

3. Apparatus according to claim 1 or 2, wherein the determination unit is configured to determine yaw and velocity values for positions which are placed ahead of an actual position of the vehicle (100).

4. Apparatus according to any one of claims 1 to 3, wherein the determination unit includes at least one neural network unit.

5. Apparatus according to claim 3, wherein a neural network includes at least one of a convolutional neural network, a long short-term memory, and/or a fully connected layer network.

6. An autonomous driving control system (1) for controlling a vehicle (100) comprising:
an occupancy grid generation unit (300) configured to generate an occupancy grid (ocg) based at least on input from an environment detection unit (4) of the vehicle (100);
a preliminary travelling path generation unit (200) which generates a preliminary travelling path; and
an apparatus (20) for determining vehicle travelling data according to any one of the previous claims.

7. The autonomous driving control system according to claim 6, further comprising an occupancy grid sequence generation unit (300a) configured to generate an occupancy grid sequence (OCG) by arranging a plurality of occupancy grids (ocg), each occupancy grid including time data, along a time axis in accordance with time data of each occupancy grid.

8. The autonomous driving control system according to any one of claims 6 to 7, wherein the occupancy grid generation unit (300) uses map data received from a map information unit in addition to the environment detection unit (4) for generating the occupancy grid (ocg) and/or point cloud data received from a point cloud data generation unit.

9. The autonomous driving control system according to any one of claims 6 to 8, further comprising an updated travelling path generation unit (30) configured to generate an updated travelling path based on the output of the output unit, wherein the updated travelling path includes coordinates of each position of the updated travelling path.

10. The autonomous driving control system according to any one of claims 6 to 9, further comprising a safety unit which includes predefined safety rules for the travelling path and which is configured to compare the updated travelling path with the safety rules and to output a flag if a safety rule is violated, the safety unit further configured to output a final travelling path.

11. A vehicle (100) including an autonomous driving control system (1) according to any one of the preceding claims 6 to 10; at least one environment detection unit (4), which is one of or a combination of a lidar unit, a camera unit, a stereo-camera unit, a radar unit, a laser unit, an IR unit, an electromagnetic wave unit; and a map information unit receiving map information.

12. A method for determining vehicle travelling data for an autonomous driving control system (1) of a vehicle (100), the method comprising:
- determining yaw and velocity values of future travelling positions of the vehicle (100) based on an occupancy grid received from an occupancy grid generation unit (300) of the autonomous driving control system (1) and based on a preliminary travelling path received from a preliminary travelling path generation unit of the autonomous driving control system (1), and
- generating an updated traveling path based on only the determined yaw and the determined velocity of the vehicle.

13. A computer program product storable in a memory comprising instructions which, when carried out by a computer, cause the computer to perform the method according to claim 12.

## Patentansprüche

1. Vorrichtung (20) zum Bestimmen von Fahrzeugfahrdaten für ein System (1) zur autonomen Fahrsteuerung eines Fahrzeugs (100), wobei die Vorrichtung Folgendes umfasst:
eine Eingabeeinheit, die konfiguriert ist, ein Belegungsraster (ocg) von einer Belegungsrastererzeugungseinheit (300) des Systems (1) zur autonomen Fahrsteuerung und einen vorläufigen Fahrpfad von einer Erzeugungseinheit (200) für vorläufige Fahrpfade des Systems (1) zur autonomen Fahrsteuerung zu empfangen, wobei der vorläufige Fahrpfad Koordinaten (X, Y) für mehrere Positionen entlang des vorläufigen Fahrpfads enthält;
eine Bestimmungseinheit, die konfiguriert ist, Gier-und Geschwindigkeitswerte künftiger Fahrpositionen des Fahrzeugs auf der Grundlage des Belegungsrasters und des vorläufigen Fahrpfads, die durch die Eingabeeinheit empfangen wurden, zu bestimmen; und
eine Ausgabeeinheit, die die bestimmten Gier- und Geschwindigkeitswerte des Fahrzeugs (100) zu einer Einheit (30) zur Erzeugung aktualisierter Fahrpfade des Systems (1) zur autonomen Fahrsteuerung ausgibt,
wobei die Eingabe in die Einheit (30) zur Erzeugung aktualisierter Fahrpfade keine Ist-Position des Fahrzeugs (100) enthält, sondern lediglich die bestimmten Gier-und Geschwindigkeitswerte des Fahrzeugs umfasst.

2. Vorrichtung nach Anspruch 1, wobei das Belegungsraster (ocg) mehrere Belegungsraster enthält, die als eine Abfolge von Rastern (OCG) entlang einer Zeitachse angeordnet sind.

3. Vorrichtung nach Anspruch 1 oder 2, wobei die Bestimmungseinheit konfiguriert ist, Gier- und Geschwindigkeitswerte für Positionen zu bestimmen, die vor einer Ist-Position des Fahrzeugs (100) gesetzt sind.

4. Vorrichtung nach einem der Ansprüche 1 bis 3, wobei die Bestimmungseinheit mindestens eine Einheit für neuronale Netze enthält.

5. Vorrichtung nach Anspruch 3, wobei ein neuronales Netz mindestens eines eines neuronalen Faltungsnetzes, eines langen Kurzzeitspeichers und/oder eines vollständig verbundenen Schichtnetzes enthält.

6. System (1) zur autonomen Fahrsteuerung zum Steuern eines Fahrzeugs (100), das Folgendes umfasst:
eine Belegungsrastererzeugungseinheit (300), die konfiguriert ist, ein Belegungsraster (ocg) mindestens auf der Grundlage einer Eingabe von einer Umgebungsdetektionseinheit (4) des Fahrzeugs (100) zu erzeugen;
eine Erzeugungseinheit (200) für vorläufige Fahrpfade, die einen vorläufigen Fahrpfad erzeugt; und
eine Vorrichtung (20) zum Bestimmen von Fahrzeugfahrdaten nach einem der vorhergehenden Ansprüche.

7. System zur autonomen Fahrsteuerung nach Anspruch 6, das ferner eine Belegungsrasterabfolgeerzeugungseinheit (300a) umfasst, die konfiguriert ist zum Erzeugen einer Belegungsrasterabfolge (OCG) durch Anordnen von mehreren Belegungsrastern (ocg), wobei jedes Belegungsraster Zeitdaten enthalten, entlang einer Zeitachse gemäß Zeitdaten jedes Belegungsrasters.

8. System zur autonomen Fahrsteuerung nach einem der Ansprüche 6 bis 7, wobei die Belegungsrastererzeugungseinheit (300) Kartendaten, die von einer Karteninformationseinheit empfangen wurden, zusätzlich zur Umgebungsdetektionseinheit (4) zum Erzeugen des Belegungsrasters (ocg) und/oder Punktwolkendaten, die von einer Punktwolkendatenerzeugungseinheit empfangen wurden, verwendet.

9. System zur autonomen Fahrsteuerung nach einem der Ansprüche 6 bis 8, das ferner eine Einheit (30) zur Erzeugung aktualisierter Fahrpfade umfasst, die konfiguriert ist, einen aktualisierten Fahrpfad auf der Grundlage der Ausgabe der Ausgabeeinheit zu erzeugen, wobei der aktualisierte Fahrpfad Koordinaten jeder Position des aktualisierten Fahrpfads enthält.

10. System zur autonomen Fahrsteuerung nach einem der Ansprüche 6 bis 9, das ferner eine Sicherheitseinheit umfasst, die vordefinierte Sicherheitsregeln für den Fahrpfad enthält und die konfiguriert ist, den aktualisierten Fahrpfad mit den Sicherheitsregeln zu vergleichen und einen Merker auszugeben, falls eine Sicherheitsregel verletzt ist, wobei die Sicherheitseinheit ferner konfiguriert ist, einen endgültigen Fahrpfad auszugeben.

11. Fahrzeug (1OO), das ein System (1) zur autonomen Fahrsteuerung nach einem der vorhergehenden Ansprüche 6 bis 10; mindestens eine Umgebungsdetektionseinheit (4), die eine oder eine Kombination einer Lidareinheit, einer Kameraeinheit, einer Stereokameraeinheit, einer Radareinheit, einer Lasereinheit, einer IR-Einheit und einer Einheit für elektromagnetische Wellen ist; und eine Karteninformationseinheit, die Karteninformationen empfängt, umfasst.

12. Verfahren zum Bestimmen von Fahrzeugfahrdaten für ein System (1) zur autonomen Fahrsteuerung eines Fahrzeugs (100), wobei das Verfahren Folgendes umfasst:
- Bestimmen von Gier- und Geschwindigkeitswerten künftiger Fahrpositionen des Fahrzeugs (100) auf der Grundlage eines Belegungsrasters, das von einer Belegungsrastererzeugungseinheit (300) des Systems (1) zur autonomen Fahrsteuerung empfangen wurde, und auf der Grundlage eines vorläufigen Fahrpfads, der von einer vorläufigen Fahrpfaderzeugungseinheit des Systems (1) zur autonomen Fahrsteuerung empfangen wurde, und
- Erzeugen eines aktualisierten Fahrpfads lediglich auf der Grundlage des bestimmten Gierens und der bestimmten Geschwindigkeit des Fahrzeugs.

13. Computerprogrammprodukt, das in einem Arbeitsspeicher speicherbar ist und Befehle enthält, die, wenn sie durch einen Computer ausgeführt werden, den Computer veranlassen, das Verfahren nach Anspruch 12 durchzuführen.

## Revendications

1. Appareil (20) destiné à déterminer des données de circulation de véhicule pour un système de commande de conduite autonome (1) d'un véhicule (100), dans lequel l'appareil comprend :
une unité d'entrée configurée pour recevoir une grille d'occupation (ocg) depuis une unité de génération de grille d'occupation (300) du système de commande de conduite autonome (1) et un trajet de circulation préliminaire depuis une unité de génération de trajet de circulation préliminaire (200) du système de commande de conduite autonome (1), dans lequel le trajet de circulation préliminaire inclut des coordonnées (X, Y) pour une pluralité de positions le long du trajet de circulation préliminaire ;
une unité de détermination configurée pour déterminer des valeurs de lacet et de vecteur vitesse de positions de circulation futures du véhicule sur la base de la grille d'occupation et du trajet de circulation préliminaire reçus par l'unité d'entrée ; et
une unité de sortie qui sort les valeurs de lacet et de vecteur vitesse déterminées du véhicule (100) vers une unité de génération de trajet de circulation mis à jour (30) du système de commande de conduite autonome (1),
dans lequel l'entrée vers l'unité de génération de trajet de circulation mis à jour (30) n'inclut pas une position actuelle du véhicule (100), mais comprend uniquement les valeurs de lacet et de vecteur vitesse déterminées du véhicule.

2. Appareil selon la revendication 1, dans lequel la grille d'occupation (ocg) inclut une pluralité de grilles d'occupation qui sont agencées en tant que séquence de grilles (OCG) le long d'un axe temporel.

3. Appareil selon la revendication 1 ou 2, dans lequel l'unité de détermination est configurée pour déterminer des valeurs de lacet et de vecteur vitesse pour des positions qui sont placées à l'avant d'une position actuelle du véhicule (100).

4. Appareil selon l'une quelconque des revendications 1 à 3, dans lequel l'unité de détermination inclut au moins une unité de réseau de neurones.

5. Appareil selon la revendication 3, dans lequel un réseau de neurones inclut au moins un élément parmi un réseau de neurones à convolution, une longue mémoire à court terme, et/ou un réseau de couches entièrement connectées.

6. Système de commande de conduite autonome (1) destiné à commander un véhicule (100) comprenant :
une unité de génération de grille d'occupation (300) configurée pour générer une grille d'occupation (ocg) sur la base d'au moins une entrée provenant d'une unité de détection d'environnement (4) du véhicule (100) ;
une unité de génération de trajet de circulation préliminaire (200) qui génère un trajet de circulation préliminaire ; et
un appareil (20) destiné à déterminer des données de circulation de véhicule selon l'une quelconque des revendications précédentes.

7. Système de commande de conduite autonome selon la revendication 6, comprenant en outre une unité de génération séquence de grilles d'occupation (300a) configurée pour générer une séquence de grilles d'occupation (OCG) en agençant une pluralité de grilles d'occupation (ocg), chaque grille d'occupation incluant des données temporelles, le long d'un axe temporel en fonction de données temporelles de chaque grille d'occupation.

8. Système de commande de conduite autonome selon l'une quelconque des revendications 6 à 7, dans lequel l'unité de génération de grille d'occupation (300) utilise des données cartographiques reçues depuis une unité d'informations cartographiques en plus de l'unité de détection d'environnement (4) pour générer la grille d'occupation (ocg) et/ou des données de nuages de points reçues depuis une unité de génération de données de nuage de points.

9. Système de commande de conduite autonome selon l'une quelconque des revendications 6 à 8, comprenant en outre une unité de génération de trajet de circulation mis à jour (30) configurée pour générer un trajet de circulation mis à jour sur la base de la sortie de l'unité de sortie, dans lequel le trajet de circulation mis à jour inclut des coordonnées de chaque position du trajet de circulation mis à jour.

10. Système de commande de conduite autonome selon l'une quelconque des revendications 6 à 9, comprenant en outre une unité de sécurité qui inclut des règles de sécurité prédéfinies pour le trajet de circulation et qui est configurée pour comparer le trajet de circulation mis à jour aux règles de sécurité et pour sortir un drapeau si une règle de sécurité est enfreinte, l'unité de sécurité étant en outre configurée pour sortir un trajet de circulation final.

11. Véhicule (100) incluant un système de commande de conduite autonome (1) selon l'une quelconque des revendications précédentes 6 à 10 ; au moins une unité de détection d'environnement (4), qui est l'une d'une unité lidar, d'une unité de caméra, d'une unité de caméra stéréoscopique, d'une unité radar, d'une unité laser, d'une unité IR, d'une unité à ondes électromagnétiques, ou une combinaison de celles-ci ; et unité d'informations cartographiques recevant des informations cartographiques.

12. Procédé pour déterminer des données de circulation de véhicule pour un système de commande de conduite autonome (1) d'un véhicule (100), le procédé comprenant les étapes consistant à :
- déterminer des valeurs de lacet et de vecteur vitesse de positions de circulation futures du véhicule (100) sur la base d'une grille d'occupation reçue depuis une unité de génération de grille d'occupation (300) du système de commande de conduite autonome (1) et sur la base d'un trajet de circulation préliminaire reçu depuis une unité de génération de trajet de circulation préliminaire du système de commande de conduite autonome (1), et
- générer un trajet de circulation mis à jour sur la base uniquement du lacet déterminé et du vecteur vitesse déterminé du véhicule.

13. Produit de programme d'ordinateur pouvant être stocké dans une mémoire comprenant des instructions qui, quand elles sont exécutées par un ordinateur, amènent l'ordinateur à effectuer le procédé selon la revendication 12.
